# EUROPEAN PATENT SPECIFICATION

(11) **EP 2 632 251 B1**
(45) Date of publication and mention of the grant of the patent: **15.04.2015**
(21) Application number: 11791059.6
(22) Date of filing: 26.10.2011
(51) Int. Cl.: A01N 25/12, A01N 57/32, A01N 25/22, A01P 5/00, A01N 25/08

(54) **STABLE GRANULATED AGRICULTURAL COMPOSITION**
GRANULIERTE STABILE LANDWIRTSCHAFTLICHE ZUSAMMENSETZUNG
COMPOSITION STABLE GRANULAIRE POUR L'AGRICULTURE

(30) Priority: 26.10.2010 JP 2010239413
(43) Date of publication of application: 04.09.2013
(73) Proprietor: Ishihara Sangyo Kaisha, Ltd., Osaka-shi, Osaka 550-0002 (JP)
(72) Inventor: AWAZU, Takao, Kusatsu-shi Shiga 525-0025 (JP); NAKAGAWA, Akira, Kusatsu-shi Shiga 525-0025 (JP)
(74) Representative: Hoffmann Eitle
(86) International application number: PCT/JP2011/075239
(87) International publication number: WO 2012/057362

(56) References cited:
- WO-A1-97/25076
- US-A- 3 062 637
- US-A- 4 059 700
- US-A- 4 133 878
- DATABASE WPI Week 200523 Thomson Scientific, London, GB; AN 2005-216749 XP002678865, -& JP 2005 041790 A (AGRO KANESHO KK) 17 February 2005 (2005-02-17)
- DATABASE BIOSIS [Online] BIOSCIENCES INFORMATION SERVICE, PHILADELPHIA, PA, US; December 1998 (1998-12), KWON TAE-YOUNG ET AL: "Cultural and chemical control of root-knot nematodes, Meloidogyne sp. on oriental melon in plastic film house", XP002678843, Database accession no. PREV199900350949 & KWON TAE-YOUNG ET AL: "Cultural and chemical control of root-knot nematodes, Meloidogyne sp. on oriental melon in plastic film house", RDA JOURNAL OF CROP PROTECTION, vol. 40, no. 2, December 1998 (1998-12), pages 96-101, ISSN: 1226-5640
- SATOKO WADA ET AL: "Effect of Three Organophosphorous Nematicides on Non-target Nematodes and Soil Microbial Community", MICROBES AND ENVIRONMENTS, vol. 23, no. 4, 1 January 2008 (2008-01-01), pages 331-336, XP055031295, ISSN: 1342-6311, DOI: 10.1264/jsme2.ME08534

## Description

### Technical Field

The present invention relates to a granulated agricultural composition in which stability of (*RS*)-*S*-sec-butyl *O*-ethyl 2-oxo-1,3-thiazolidin-3-ylphosphonothioate (common name: fosthiazate) or *O*-ethyl *S*-propyl (E)-[2-(cyanoimino)-3-ethylimidazolidin-1-yl]phosphonothioate (common name: imicyafos) is improved.

### Background Art

Patent Literature 1 discloses an organophosphorus compound exhibiting an effective controlling action against harmful insects, mites, and nematodes and Patent Literature 2 discloses an optically active organophosphorus compound which is useful as an active ingredient of an agent for controlling harmful animal. In Patent Literatures 1 and 2, the organophosphorus compounds may be formulated together with various agricultural additives, and clay is described as one example of carriers in the list of the agricultural additives. Moreover, Patent Literature 3 describes a granule composition for soil treatment in which imicyafos is adhered to the surface of siliceous mineral particles having a water content of 0.2% or less and a silicic acid content (SiO₂) of 90% or more. Patent Literature 4 discloses a pesticidal organothiophosphorous compound in combination with a clay carrier with high storage stability.Patent Literature 5 discloses that the physical stability of granular agrochemical formulations, including an organothiophosphorous compound, may be increased using a calcined clay, wherein the clay is calcined at a termperature between 316 and 538°C (600 and 1000°F). Patent Literature 6 discloses that the dermal toxicity of granular formulations of *O*,*O*-diethyl-*S*-[(1,1-dimethylethyl)thio]phosphorodithiorate are improved when using a calcined clay as carrier.

### Citation List

### Patent Literature

Patent Literature 1: JP-A-63-211293
Patent Literature 2: JP-A-2-88590
Patent Literature 3: JP-A-2005-41790
Patent Literature 4: US 4,133,878
Patent Literature 5: US 3,062,637
Patent Literature 6: US 4,059,700

### Summary of Invention

### Technical Problem

There is no description or suggestion showing that calcined clay may contribute stabilization of fosthiazate or imicyafos in the above technical art, wherein the clay is calcined at a temperature of 800°C or higher.

There is a case where fosthiazate or imicyafos becomes unstable depending on the kind of the carrier to be used, at the time when a granulated agricultural composition containing fosthiazate or imicyafos as an active ingredient is prepared. For example, in the case where common clay described in the aforementioned technical art is used, sufficient stability of the organophosphorus compound cannot be secured in some cases. The present invention provides a granulated agricultural composition exhibiting improved stability of the organophosphorus compound that is an active ingredient.

### Solution to Problem

As a result of various studies for solving the above problem, it has been found that, in a granulated agricultural composition comprising fosthiazate or imicyafos as an active ingredient, stability of the organophosphorus compound is improved by using calcined clay, which is prepared by calcining clay at a temperature of 800°C or higher.

### Advantageous Effects of Invention

According to the invention, a granulated agricultural composition exhibiting improved stability of fosthiazate or imicyafos which is an active ingredient can be obtained.

### Description of Embodiments

In the granulated agricultural composition comprising fosthiazate or imicyafos as an active ingredient, stability of the organophosphorus compound is improved by using calcined clay, which is prepared by calcinating clay at a temperature of 800°C or higher, at the time when the organophosphorus compound is prepared into a formulation.

Fosthiazate or imicyafos can be prepared according to a known method (such as JP-A-63-211293).

In the present invention, the stability means chemical stability of the organophosphorus compound and mainly means the stability during storage in a formulation. The stability during storage can be judged by such as measuring the decomposition rate of the organophosphorus compound under certain storage conditions after a certain period of time. Specific examples of the method include a method described in Examples in the present description.

In the present invention, the term "to exhibit an improved stability" means, for example, that the decomposition rate of the compound as an active ingredient in case of using calcined clay, which is prepared by calcinating clay at a temperature of 800°C or higher, is lower than that in case of using non-calcined clay.

In the present invention, the term "granulated" means that the composition is granulated so as to fall within a preparation form such as granule and microgranule known in agricultural fields. For example, the term "granulated" means that the composition is granulated so as to have a general particle diameter of the above formulation type.

Examples of the calcined clay include one obtained by calcining naturally occurring clay, one obtained by calcining commercially available clay, crushed bricks and the like. Since brick is usually produced by heating at high temperature and thus the clay in the brick is in calcined state, it is also possible to crush the brick to use the crushed one for the preparation of the granulated agricultural composition of the invention. During the production process of brick, defective products such as those in which a part thereof is chipped are sometimes formed. However, since such products are available at a low price, they are commercially useful in some cases.

In the above naturally occurring clay and commercially available clay, contained ingredients and properties are not always equal in some cases. Even in such cases, in the invention, the unfavorable influence on the stability of the organophosphorus compound can be prevented or reduced by calcining the clay at a temperature of 800°C or higher. Thus, the granulated agricultural composition of the invention can be prepared as a stable granulated agricultural composition comprising the organophosphorus compound, regardless of the kind of the clay.

Examples of minerals composing the clay include Montmorillonite, Kaolinite, Pyrophyllite, Bentonite, Vermiculite, Talc, silica stone, and the like. In the invention, the clay is not construed as being limited to clays derived from the above minerals, various kinds of clays can be used.

The clay prepared by molding granulated clay or powdery clay can be also used. The clay can be molded according to the preparation method of the formulation known in agricultural fields. For example, the clay can be molded so as to be granulated in accordance with various granulation methods, such as extrusion, pan granulation, spray drying, fluid bed granulation and the like. When the clay is molded so as to be granulated, the particle diameter of the molded clay is preferably from 0.3 to 2 mm and more preferably 0.4 to 1.2 mm.

When the clay is molded, various additives can be used. Preferable examples of the additives include a binder, such as polyvinyl alcohol, sodium carboxymethyl cellulose, lignin sulfonate, starch, dextrin, and gelatin.

The calcined clay is prepared by calcinating clay at a temperature of 800°C or higher, more preferably 900 to 1300°C, and further preferably a temperature of 1000 to 1200°C for preferably 15 minutes to 2 hours, and more preferably 30 minutes to 1 hour.

The temperature and time for the calcination can be appropriately adjusted according to the conditions such as the place where the clay is produced, the kind of compounding ingredients, and the composition ratio.

The composition ratio of the ingredients contained in the calcined clay is not categorically defined. Specifically, the composition having a ratio of 40 to 95% by weight of silicon oxide, 2 to 40% by weight of aluminum oxide, and 0.1 to 7% by weight of iron oxide may be mentioned. The binder can be used at the time of molding clay but since almost the whole amount of the binder disappears during the calcination of the clay, it is difficult to define the compounding ratio of the binder in the calcined clay. Moreover, the water content contained in the calcined clay is preferably as small as possible. For example, it is adjusted so as to be preferably 1% by weight or less, and more preferably 0.2% by weight or less.

Sometimes, the particle diameter of the calcined clay is appropriately adjusted according to the place to which the granulated agricultural composition is applied, the kind of targets to be controlled, and the like. The particle diameter may be preferably 0.1 to 2 mm, more preferably 0.3 to 1.2 mm. Moreover, in the case where clay is molded into granulated one and then calcined, the particle diameter of a molded particle diameter is preferably 0.3 to 2 mm, more preferably 0.4 to 1.2 mm.

Examples of formulation of the granulated agricultural composition of the invention include various forms prepared according to various formulation methods in the art. Examples of the specific forms of the formulation include granules, microgranules, and the like. Among them, granules are preferable. The granulated agricultural composition can be prepared in accordance with various granulation methods, such as extrusion, pan granulation, spray drying, and fluid bed granulation.

Examples of the additives which can be used at the time of formulation preparation include various kinds of additives which are usually used in the technical field. The additives are not particularly limited but examples include surfactants, fillers, binders, stabilizers, and the like. Examples of the surfactants include nonionic surfactants such as polyoxyethylene alkyl ethers, polyoxyethylene alkylene ethers, polyoxyethylene alkylaryl ethers, polyoxyethylene styrylaryl ethers, polyoxyethylene oleyl ethers, polyoxyethylene fatty acid esters, polyoxyethylene sorbitan fatty acid esters, and polyoxyalkylene block polymers; anionic surfactants such as alkylarylsulfonic acid salts, dialkylsulfosuccinic acid salts, and alkyl phosphoric acid esters; and the like. Examples of the binders include polyvinyl alcohol, sodium carboxymethyl cellulose, lignin sulfonic acid salts, starch, dextrin, gelatin, and the like.

The compounding ratio of each ingredient in the granulated agricultural composition of the invention is not categorically defined but the compounding ratio of the organophosphorus compound is preferably 0.5 to 30% by weight, and more preferably 1 to 15% by weight. The compounding ratio of the calcined clay is preferably 70 to 99.5% by weight, and more preferably 85 to 99% by weight. Moreover, when various additives are compounded, for example, the compounding ratio of the surfactant is preferably 0.1 to 10% by weight, and more preferably 0.1 to 3% by weight.

It is considered that the calcined clay can remove a factor which exerts an unfavorable influence on the stability of the organophosphorus compound or can reduce the unfavorable influence.

For example, it is considered that, since the water content in clay is decreased by calcining the clay at a temperature of 800°C or higher, it can contribute to the stabilization of the organophosphorus compound. Moreover, although there is the possibility that ingredients in the clay, such as silicon oxide, and aluminum oxide are considered to act as catalysts to cause hydrolysis of the organophosphorus compound or to accelerate hydrolysis, but it is considered that the action is deactivated by calcining the clay at a temperature of 800°C or higher to thereby contribute to the stabilization of the organophosphorus compound. Furthermore, since the specific surface area of each ingredient in the clay is decreased by calcining the clay, the possibility that the ingredient which possibly exhibits such an unfavorable influence on the stability of the organophosphorus compound as mentioned above contacts with each other or with the organophosphorus compound is reduced to thereby contribute the stabilization of the organophosphorus compound.

### Examples

In order to explain the invention in more detail, Examples are described in the following but the invention should not be construed as being limited thereto.

### Example 1

### (Formulation Preparation)

Powdery clay (trade name: FUBASAMI K clay, BX kaolin, or MN clay) and a binder (5% by weight of an aqueous solution of trade name: CELLOGEN 7A) were kneaded and granulated in an extruder (a screen having a diameter of 0.8 mm). Thereafter, the granulated product was dried, sieved, and then calcined in an electric furnace for 30 minutes to obtain calcined clay. Moreover, a granulated clay (trade name: TKR clay) was calcined in an electric furnace for 30 minutes to obtain calcined clay.

Then, 89.58 parts by weight of the above calcined clay and 10.42 parts by weight of fosthiazate (purity: 96%) were mixed to obtain a granule.

Details of individual commodities used for formulation preparation are as follows.
- FUBASAMI K clay: manufactured by FUBASAMI CRAY CO. LTD.
- BX kaolin: manufactured by Kanaya Kousan Co., Ltd.
- MN clay: manufactured by NEORAITO KOUSAN CO., LTD.
- TKR clay: manufactured by Anhui Mingmei Minerals Co., Ltd.
- CELLOGEN 7A: sodium carboxymethyl cellulose manufactured by DAI-ICHI KOGYO SEIYAKU CO., LTD.

### (Stability Test)

After the above granule was placed in a sample vial and stored in a constant-temperature chamber set at 54°C for 4 weeks, the granule was analyzed by liquid chromatography to determine a decomposition rate of fosthiazate. The results are shown in Table 1 for every kind of clay and every calcination temperature. Also, the results in the case where a formulation was prepared using non-calcined clay are shown in Table 1 together.

**Table 1**

| Kind of clay | Decomposition rate (%) of fosthiazate at each calcination temperature | | | | |
|---|---|---|---|---|---|
| | 900°C | 1000°C | 1100°C | 1200°C | Non-calcined |
| FUBASAMI K clay | 7.9 | 7.3 | 6.8 | 6.5 | 8.7 |
| BX kaolin | - | 10.4 | 5.4 | - | 19.0 |
| MN clay | 2.3 | 1.5 | 1.6 | - | 3.3 |
| TKR clay | 22.4 | 14.5 | 3.6 | 3.0 | 69.2 |

### Example 2

A granule of fosthiazate was prepared in the same manner as in the above Example 1 using a crushed granulated substance of brick (manufactured by Ruijia Cat Litter Products Co., Ltd.) and was subjected to the stability test. As a result, the decomposition rate of fosthiazate was 5.2%.

### Example 3

FUBASAMI K clay (trade name) was kneaded with water and granulated in an extruder (a screen having a diameter of 0.8 mm). Thereafter, the granulated product was dried, sieved, and then calcined in an electric furnace (1100°C) for 30 minutes to obtain calcined clay. A granule of fosthiazate was prepared in the same manner as in the above Example 1 using the calcined clay and was subjected to the stability test. As a result, the decomposition rate of fosthiazate was 6.5%.

### Example 4

TKR clay (trade name) was calcined in an electric furnace (1100°C) for 30 minutes to obtain calcined clay. Then, 94.79 parts by weight of the calcined clay and 5.21 parts by weight of fosthiazate (purity: 96%) were mixed to obtain a granule. Using the granule, the stability test was performed in the same manner as in the above Example 1. As a result, the decomposition rate of fosthiazate was 5.8%.

### Example 5

TKR clay (trade name) was calcined in an electric furnace (1100°C) for 30 minutes to obtain calcined clay. Then, 89.90 parts by weight of the calcined clay and 89.90 parts by weight of non-calcined TKR clay were each mixed with 10.10 parts by weight of imicyafos (purity: 99%) were mixed to obtain a granule. Both granules were each placed in a sample vial and stored in a constant-temperature chamber set at 54°C for 2 weeks, each granule was analyzed by liquid chromatography to determine a decomposition rate of imicyafos. As a result, the decomposition rate of imicyafos in the granule using the non-calcined TKR clay was 43.3%, while the decomposition rate of imicyafos in the granule using the calcined TKR clay was 8.5%.

### Examples 6 to 11

In accordance with the above Example 1, granules are prepared with the compounding ingredients and compounding ratios shown in Table 2. By carrying out the stability test, it is confirmed that the active ingredients show good stability.

Details of the surfactants used for formulation preparation are as follows.
- NOIGEN EA-177: polyoxyethylene distyrylphenyl ether (manufactured by DAI-ICHI KOGYO SEIYAKU CO., LTD)
- LAMIGEN ES-60: polyoxyethylene lanolin fatty acid ester (manufactured by DAI-ICHI KOGYO SEIYAKU CO., LTD)

**Table 2**

| Compounding ingredient | | Compounding ratio (parts by weight) | | | | | |
|---|---|---|---|---|---|---|---|
| | | Example | | | | | |
| | | 6 | 7 | 8 | 9 | 10 | 11 |
| Active ingredient | Fosthiazate (purity 96%) | 1.05 | 15.62 | 5.21 | 10.21 | - | - |
| | Imicyafos (purity 99%) | - | - | - | - | 1.01 | 15.15 |
| Calcined clay | FUBASAMI K clay | 98.95 | - | - | - | 98.99 | - |
| | BX kaolin | - | 84.38 | - | - | - | 84.85 |
| | MN clay | - | - | 94.69 | - | - | - |
| | TKR clay | - | - | - | 86.79 | - | - |
| Surfactant | NOIGEN EA-177 | - | - | 0.1 | - | - | - |
| | LAMIGEN ES-60 | - | - | - | 3.0 | - | - |

### Industrial Applicability

According to the invention, a granulated agricultural composition exhibiting improved stability of an organophosphorus compound which is an active ingredient can be obtained.

## Claims

1. A granulated agricultural composition comprising (a) (*RS*)-*S*-sec-butyl-O-ethyl 2-oxo-1,3-thiazolidin-3-ylphosphonothioate or *O*-ethyl *S*-propyl (E)-[2-(cyanoimino)-3-ethylimidazolidin-1-yl]phosphonothioate and (b) calcined clay which is prepared by calcinating clay at a temperature of 800°C or higher.

2. The composition according to claim 1, which comprises the ingredient (a) of 0.5 to 30% by weight and the ingredient (b) of 70 to 99.5% by weight.

3. The composition according to claim 1, wherein the ingredient (b) is prepared by calcinating clay at a temperature of 900 to 1300°C.

4. The composition according to claim 3, wherein the clay is calcined for 15 minutes to 2 hours.

5. The composition according to claim 1, wherein the ingredient (b) has a water content of 1 % by weight or less.

6. The composition according to claim 1, wherein the ingredient (a) is (*RS*)-S-sec-butyl *O*-ethyl 2-oxo-1,3-thiazolidin-3-ylphosphonothioate.

7. A process for producing a granulated agricultural composition comprising (*RS*)-*S*-sec-butyl *O*-ethyl 2-oxo-1,3-thiazolidin-3-ylphosphonothioate or *O-*ethyl *S*-propyl (E)-[2-(cyanoimino)-3-ethylimidazolidin-1-yl]phosphonothioate as an active ingredient, which comprises compounding calcined clay which is prepared by calcinating clay at a temperature of 800°C or higher to improve stability of the active ingredient.

8. A method for improving stability of an active ingredient, comprising compounding calcined clay which is prepared by calcinating clay at a temperature of 800°C or higher, wherein the active ingredient is (*RS*)-*S*-sec-butyl *O*-ethyl 2-oxo-1,3-thiazolidin-3-ylphosphonothioate or *O*-ethyl *S*-propyl (E)-[2-(cyanoimino)-3-ethylimidazolidin-1-yl]phosphonothioate and is comprised in a granulated agricultural composition.

## Patentansprüche

1. Granulierte landwirtschaftliche Zusammensetzung, umfassend (a) (RS)-S-sek-Butyl-O-ethyl-2-oxo-1,3-thiazolidin-3-ylphosphonothioat oder O-Ethyl-S-propyl-(E)-[2-(cyanoimino)-3-ethylimidazolidin-1-yl]phosphonothioat und (b) kalzinierten Ton, der durch Kalzinieren von Ton bei einer Temperatur von 800°C oder höher hergestellt ist.

2. Zusammensetzung gemäss Anspruch 1, die 0,5 bis 30 Gew.% des Bestandteils (a) und 70 bis 99,5 Gew.% des Bestandteils (b) umfasst.

3. Zusammensetzung gemäss Anspruch 1, wobei der Bestandteil (b) durch Kalzinieren von Ton bei einer Temperatur von 900 bis 1.300°C hergestellt ist.

4. Zusammensetzung gemäss Anspruch 3, wobei der Ton 15 Minuten bis 2 Stunden kalziniert wird.

5. Zusammensetzung gemäss Anspruch 1, wobei der Bestandteil (b) einen Wassergehalt von 1 Gew.% oder weniger aufweist.

6. Zusammensetzung gemäss Anspruch 1, wobei der Bestandteil (a) (RS)-S-sek-Butyl-O-ethyl-2-oxo-1,3-thiazolidin-3-ylphosphonothioat ist.

7. Verfahren zur Herstellung einer granulierten landwirtschaftlichen Zusammensetzung, umfassend (RS)-S-sek-Butyl-O-ethyl-2-oxo-1,3-thiazolidin-3-ylphosphonothioat oder O-Ethyl-S-propyl-(E)-[2-(cyanoimino)-3-ethylimidazolidin-1-yl]phosphonothioat als Wirkstoff, das das Beimischen von kalziniertem Ton, der durch Kalzinieren von Ton bei einer Temperatur von 800°C oder höher hergestellt ist, zur Verbesserung der Stabilität des Wirkstoffs umfasst.

8. Verfahren zur Verbesserung der Stabilität eines Wirkstoffs, umfassend das Beimischen von kalziniertem Ton, der durch Kalzinieren von Ton bei einer Temperatur von 800°C oder höher hergestellt ist, wobei der Wirkstoff (RS)-S-sek-Butyl-O-ethyl-2-oxo-1,3-thiazolidin-3-ylphosphonothioat oder O-Ethyl-S-propyl-(E)-[2-(cyanoimino)-3-ethylimidazolidin-1-yl]phosphonothioat ist und in einer granulierten landwirtschaftlichen Zusammensetzung enthalten ist.

## Revendications

1. Composition granulée à usage agricole comprenant (a) du 2-oxo-1,3-thiazolidin-3-ylphosphonothioate de (*RS*)-*S*-sec-butyl-*O*-éthyle ou du (E)-[2-(cyanoimino)-3-éthylimidazolidin-1-yl]phosphonothioate d'*O-*éthyl-*S*-propyle et (b) de l'argile calcinée qui est préparée par calcination d'argile à une température de 800°C ou plus.

2. Composition selon la revendication 1, qui comprend l'ingrédient (a) à raison de 0,5 à 30 % en poids et l'ingrédient (b) à raison de 70 à 99,5 % en poids.

3. Composition selon la revendication 1, dans laquelle l'ingrédient (b) est préparé par calcination d'argile à une température de 900 à 1300°C.

4. Composition selon la revendication 3, dans laquelle l'argile est calcinée pendant 15 minutes à 2 heures.

5. Composition selon la revendication 1, dans laquelle l'ingrédient (b) a une teneur en eau de 1 % en poids ou moins.

6. Composition selon la revendication 1, dans laquelle l'ingrédient (a) est le 2-oxo-1,3-thiazolidin-3-ylphosphonothioate de (*RS*)-*S*-sec-buty)-*O*-éthyle.

7. Procédé pour produire une composition granulée à usage agricole comprenant du 2-oxo-1,3-thiazolidin-3-ylphosphonothioate de (*RS*)-*S*-sec-butyl-*O*-éthyle ou du (E)-[2-(cyanoimino)-3-éthylimidazolidin-1-yl]phosphonothioate d'*O-*éthyl-*S*-propyle à titre d'agent actif, qui comprend la combinaison d'argile calcinée qui est préparée par calcination d'argile à une température de 800°C ou plus pour améliorer la stabilité de l'agent actif.

8. Procédé pour améliorer la stabilité d'un agent actif, comprenant la combinaison d'argile calcinée qui est préparée par calcination d'argile à une température de 800°C ou plus, dans lequel l'agent actif est le 2-oxo-1,3-thiazolidin-3-ylphosphonothioate de (*RS*)-*S*-sec-butyl-*O*-éthyle ou le (E)-[2-(cyanoimino)-3-éthylimidazolidin-1-yl]phosphonothioate d'*O*-éthyl-*S*-propyle et est compris dans une composition granulée à usage agricole.
